# EUROPÄISCHE PATENTSCHRIFT

(11) **EP 0 744 130 B1**
(45) Veröffentlichungstag und Bekanntmachung des Hinweises auf die Patenterteilung: **07.11.2001**
(21) Anmeldenummer: 96201248.0
(22) Anmeldetag: 07.05.1996
(51) Int. Cl.: A22C 11/02

(54) **Verfahren und Vorrichtung zum Herstellen von Würsten**
Method and device for sausage stuffing
Procédé et dispositif pour la fabrication de saucisses

(30) Priorität: 26.05.1995 DE 19519394
(43) Veröffentlichungstag der Anmeldung: 27.11.1996
(73) Patentinhaber: Poly-clip System GmbH & Co. KG, 60489 Frankfurt am Main (DE)
(72) Erfinder: Hanten, Jürgen, 35519 Rockenberg (DE); Vermehren, Günter, 61250 Usingen (DE)
(74) Vertreter: Fischer, Ernst, Dr.

(56) Entgegenhaltungen:
- CH-A- 458 969
- DE-A- 3 608 983
- DE-U- 9 400 771
- FR-A- 2 089 747
- US-A- 2 999 270
- US-A- 3 148 408
- US-A- 4 558 488
- US-A- 4 709 450
- US-A- 4 766 645
- US-A- 4 837 897

## Beschreibung

Die Erfindung betrifft ein Verfahren zum Herstellen von Würsten, bei dem eine schlauchförmige, an einem Ende verschlossene und mit Bilddruck versehene Wursthülle mit Wurstbrät befüllt wird, indem das Wurstbrät durch das offene Ende der Wursthülle in diese gedrückt und dabei die Wursthülle gegen den Widerstand einer Darmbremse mitgenommen wird und befüllte Teillängen der Wursthülle in Abhängigkeit von Markierungen auf der Wursthülle durch Zusammendrükken und Verschließen abgeteilt sowie anschließend von der übrigen Wursthülle abgetrennt werden. Sie betrifft ferner eine Vorrichtung, insbesondere zum Durchführen dieses Verfahrens, mit einem Füllrohr und einer Darmbremse sowie Mitteln zum Verschließen und Abtrennen von befüllten Teillängen der Wursthülle (Würsten).

Eine Erscheinungsform von Würsten zeichnet sich durch auf die Hülle der Wurst aufgebrachte Bilddrucke aus. Solche mit einem Bilddruck versehenen Würste werden heutzutage ausschließlich unter Verwendung von einzelnen, an den Enden verschlossenen und eventuell mit einer Aufhängeschlaufe versehenen Schlauchabschnitten hergestellt, die einzeln gefüllt und verschlossen werden. Ein solches Herstellverfahren ist jedoch sehr zeitintensiv. Zwar sind zum Herstellen anderer Wurstarten auch kontinuierliche Herstellverfahren für hohe Produktionsgeschwindigkeiten bekannt. Diese Verfahren sind aber aus den weiter unten genannten Gründen für die Produktion von Würsten mit Bilddruck ungeeignet.

Bei den kontinuierlichen Herstellverfahren wird Wurstbrät aus einem Füllrohr in eine an ihrem vorderen Ende verschlossene, schlauchförmige Wursthülle gedrückt, deren Vorrat auf dem Füllrohr gespeichert ist. Beim Füllvorgang läuft die Wursthülle durch eine Darmbremse hindurch vom Füllrohr ab, bis sich jeweils die für eine Wurst ausreichende Menge Wurstbrät in der Wursthülle befindet. Das Befüllen wird dann unterbrochen, die befüllte Teillänge der Wursthülle wird - beispielsweise durch Zusammenraffen und Setzen zweier Clips - abgeteilt und anschließend von der restlichen Wursthülle zwischen den beiden Clips abgetrennt. Daraufhin wird eine neue Teillänge der Wursthülle auf die gleiche Weise befüllt. Das für die einzelne Wurst angestrebte Gewicht wird dadurch sichergestellt, daß die Füllmaschine immer dann das Befüllen unterbricht und das Abteilen und Abtrennen auslöst, wenn ein bestimmtes Volumen - z.B. das vorher eingestellte Kammervolumen einer Kolbenpumpe - in die Wursthülle eingefüllt worden ist. Einerseits das Befüllen und andererseits das Abteilen und Abtrennen geschehen bei Verwendung einer Kolbenpumpe synchron zum Hub des Kolbens.

Obwohl ein solches Verfahren höhere Produktionsgeschwindigkeiten zuläßt und durch das immer konstante Füllvolumen zu gewichtsgenauen Würsten führt, eignet es sich nicht für die Herstellung von Würsten mit Bildaufdruck: Die Wursthülle muß vor dem Befüllen mit den Bilddrucken versehen werden, diese könnten sich zwar in einem konstanten Abstand voneinander auf der Wursthülle befinden, und der Abstand könnte in etwa der Wursthüllen-Länge entsprechen, die für eine Wurst benötigt wird. Aber schon geringe Differenzen zwischen der benötigten Wursthüllen-Länge und dem Abstand der Bilddrucke haben einen sich aufaddierenden Fehler zur Folge, der dazu führt, daß sich ein Bilddruck nach einigen Befüllvorgängen an der Trennstelle zwischen zwei Würsten befindet.

Zwar ist bereits vorgeschlagen worden, Wursthüllen mit Bilddruck zusätzlich mit Markierungen zu versehen, welche das Verschließen und Abtrennen der einzelnen Würste entsprechend dem sich wiederholenden Aufdruck auf der Wursthülle steuern (DE-PS 36 08 983, DE-GM 94 00 771), jedoch gelingt damit nicht die Herstellung gewichtsgenauer Würste.

Es ist daher die der Erfindung zugrunde liegende Aufgabe, ein Verfahren anzugeben, das es ermöglicht, Würste mit Bilddruck mit einer hohen Produktionsgeschwindigkeit gewichtsgenau herzustellen.

Die Aufgabe wird gemäß der Erfindung durch ein Verfahren der eingangs genannten Art gelöst, bei dem jede befüllte Teillänge (Wurst) nach dem Abtrennen gewogen und die Gewichtsdifferenz zwischen einem vorgebbaren Sollgewicht und dem tatsächlichen Gewicht der Teillänge bestimmt wird, und bei dem die Bremskraft der Darmbremse erhöht wird, wenn das tatsächliche Gewicht der befüllten Teillänge kleiner als deren Sollgewicht ist, jedoch verkleinert wird, wenn das tatsächliche Gewicht größer als das Sollgewicht ist, bis das tatsächliche Gewicht und das Sollgewicht übereinstimmen.

Gemäß der Erfindung wird in Abhängigkeit von einer Gewichtsdifferenz beispielsweise ein Stellwert für die Darmbremse von der Art gebildet, daß die Bremskraft der Darmbremse vergrößert wird, wenn das tatsächliche Gewicht einer gewogenen Wurst unter ihrem Sollwert liegt: Wenn die Wursthülle von der Darmbremse stärker gebremst wird, erhöht sich der Druck in der befüllten Teillänge der Wursthülle, diese wird infolgedessen geringfügig gedehnt, und Durchmesser, Prallheit, Volumen und mithin auch das Gewicht der gerade hergestellten Teillänge nehmen zu. Umgekehrt wird die Bremskraft der Darm-bremse verringert, wenn das gemessene tatsächliche Gewicht der Würste größer als deren Sollgewicht ist. Das Lockern der Darmbremse führt dann zu leichteren Würsten.

Im Gegensatz zu herkömmlichen Verfahren wird das Wurstbrät bei der Erfindung nicht schon vor dem Befüllen portioniert, sondern während des Befüllens durch Abteilen von befüllten Teillängen der Wursthülle in - bezogen auf die Wursthüllefesten Längsabständen. Auf diese Weise können bedruckte Wursthüllen vorteilhaft in einem kontinuierlichen Herstellverfahren befüllt werden. Zugleich bietet das erfindungsgemäße Verfahren eine hohe Gewichtsgenauigkeit, so daß die einzelnen Würste zum Verkauf nicht einzeln ausgepreist werden müssen, sondern mit einem Einheitspreis versehen werden können. Dieser kann schon vor dem Befüllen beispielsweise zusammen mit einem Bild auf die Wursthülle gedruckt werden, so daß der ansonsten notwendige Schritt des Auszeichenens der Würste nach dem Befüllen entfallen kann. Hieraus ergibt sich ein weiterer Produktivitätsvorteil des erfindungsgemäßen Verfahrens.

Indem die Markierungen, die das Abteilen und Abtrennen befüllter Teillängen der Wursthülle auslösen, beispielsweise gleichzeitig mit dem Bilddruck auf die Wursthülle aufgebracht werden, kann das Abteilen und Abtrennen besonders leicht mit dem Bilddruck auf der Wursthülle synchronisiert werden, so daß sich jedes einzelne Bild an genau definierter Position der fertig befüllten Wurst befindet. Die Markierungen können von beliebiger Art sein, beispielsweise auch mechanische oder magnetische Markierungen, es können aber auch optische Markierungen sein, die beispielsweise Teil des Bilddruckes sind.

Zur Lösung der Aufgabe wird auch eine Vorrichtung der eingangs genannten Art vorgeschlagen, welche eine Waage für einzelne Würste und eine Auswertungseinheit aufweist, bei der die Bremskraft der Darmbremse über eine Stelleinheit einstellbar ist und bei der die Waage über die Auswertungseinheit mit der Stelleinheit verbunden ist.

Mit der erfindungsgemäßen Vorrichtung lassen sich alle Vorteile des erfindungsgemäßen Verfahrens erzielen.

Eine vorteilhafte Variante der Vorrichtung besteht darin, daß die Vorrichtung einen Sensor für Markierungen auf der Wursthülle aufweist.

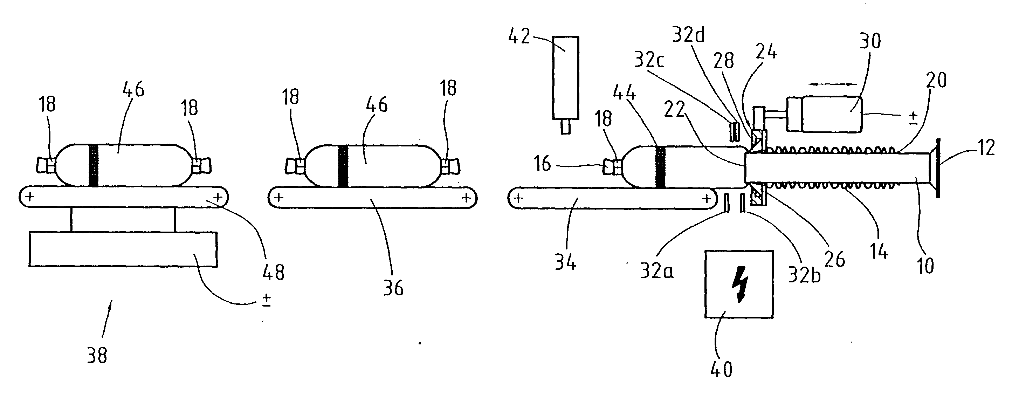

Die Erfindung soll nun anhand der Zeichnung näher erläutert werden. Die einzige Figur zeigt eine schematische Darstellung einer Anlage zum erfindungsgemäßen Herstellen von Würsten.

Ein wesentlicher Bestandteil der Anlage ist ein Füllrohr 10, dessen Einlaßöffnung 12 während des Betriebs der Anlage an einen Auslaß einer in der Figur nicht dargestellten Füllmaschine angeschlossen ist. Das Füllrohr 10 trägt auf seiner Außenfläche eine zur Raupe gestauchte, schlauchförmige Wursthülle 14, deren erstes Ende 16 mit einem Clip 18 verschlossen ist. Das zweite, offene Ende 20 der Wursthülle 14 befindet sich am Ende der Raupe auf der Außenfläche des Füllrohres 10.

In der Nähe einer Auslaßöffnung 22 des Füllrohres 10 befindet sich eine Darm-bremse 24, welche einen Bremsring 26 mit einer konischen Außenfläche aufweist, auf der ein Einstellring 28 in Richtung der Konusachse längsverschiebbar angeordnet ist. Der Bremsring 26 besteht in der Regel aus Gummi und liegt mit seiner vorderen Innenkante außen auf der Wursthülle 14 auf und drückt diese auf die Außenfläche des Füllrohres 10. Der Einstellring 28 ist mit einer Stelleinheit 30 verbunden und kann von dieser verschoben werden.

Vor dem Füllrohrauslaß 22 (in der Figur links neben dem Füllrohrauslaß 22) befinden sich stumpfe Verdrängerbleche 32a bis 32d. Neben den Verdrängerblechen beginnt auf deren dem Füllrohrauslaß 22 abgewandten Seite ein Förderband 34 mit etwa der Länge einer Wurst, welches so angeordnet ist, daß es den befüllten Teil der Wursthülle 14 während des Befüllens unterstützt. An das Förderband 34 schließt sich ein Beschleunigungs-Förderband 36 an, welches auf ein Transportband 48 zuläuft, das über einer Waage 38 angeordnet ist.

Die Waage 38 steht mit einer Auswerteeinheit 40 in Verbindung, die ihrerseits mit der Stelleinheit 30 für die Darmbremse 24 verbunden ist. Oberhalb des Förderbandes 34 ist ein Sensor 42 so angeordnet, daß er auf der Wursthülle 14 aufgebrachte Markierungen 44 erfassen kann.

Zum Herstellen von Würsten und Wursthüllen mit Bilddruck wird die Wursthülle 14 zunächst mit Markierungen 44 und Bilddrucken versehen. Der Abstand, den die Markierungen 44 voneinander haben, entspricht der Länge der Wursthülle 14, die für Würste des gewünschten Gewichtes benötigt wird: Über die Dichte des Wurstbräts hängen Gewicht und Volumen der Wurst direkt zusammen, so daß bei einem bekannten mittleren Durchmesser der Wursthülle 14 die für Würste eines bestimmten Gewichtes benötigte Länge errechnet werden kann. Sollen alle Würste das gleiche Gewicht haben, haben auch die Markierungen auf der Wursthülle einen einheitlichen Abstand voneinander. Es ist aber auch möglich, z.B. abwechselnd leichtere und kürzere sowie schwerere und längere Würste herzustellen, wenn der Abstand der Markierungen 44 auf der Wursthülle entsprechend alterniert.

Die bedruckte Wursthülle 14 wird so auf das Füllrohr 10 aufgezogen, daß sich ihr erstes, verschlossenes Ende 16 bei dem Füllrohrauslaß 22 befindet. Anschließend kann das Befüllen der Wursthülle 14 beginnen, indem Wurstbrät so durch das Füllrohr 10 gedrückt wird, daß es beim Füllrohrauslaß 22 austritt und die Wursthülle 14 bei ihrem verschlossenen Ende 16 beginnend auffüllt. Während des Befüllens wird die auf dem Füllrohr 10 befindliche Wursthülle 14 nachgezogen und dabei von der Darmbremse 24 gebremst. Die Stärke der Bremskraft bestimmt hierbei die Prallheit der fertigen Wurst.

Unter dem Druck des Wurstbräts schiebt sich der befüllte Teil der Wursthülle 14 so lange vor, bis der Sensor 42 die Markierung 44 auf der Oberfläche der Wursthülle 14 erfaßt. Wenn der Sensor 42 die Markierung 44 erfaßt, wird das Füllen unterbrochen, die Verdrängerbleche 32a bis 32d greifen zu und raffen die Wursthülle 14 am Ort des Zugreifens zusammen, so daß eine vordere, befüllte Teillänge der Wursthülle 14 von der restlichen Wursthülle 14 abgeteilt, aber noch nicht abgetrennt wird. Die beiden Verdrängerbleche 32a und 32c werden daraufhin in Richtung der Wurstlängsachse so weit bewegt, daß die Wursthülle 14 zwischen den Verdrängerblechen auf einer Länge zusammengerafft ist, die ausreicht, um die Wursthülle anschließend durch Setzen zweier nebeneinanderliegender Clips 18 zu verschließen. Daraufhin wird die Wursthülle 14 zwischen den beiden Clips 18 durchgetrennt, so daß sowohl die nunmehr abgetrennte, befüllte Teillänge als auch das bei dem Füllrohrauslaß 22 befind-liche Ende der noch unbefüllten Restlänge der Wursthülle 14 verschlossen sind. Jede befüllte und abgeteilte Teillänge bildet eine Wurst 46.

Während sich der befüllte Teil der Wursthülle 14 beim Befüllen nach vorne schiebt, wird dieser Teil von einem Förderband 34 unterstützt. Nach ihrem Abtrennen wird jede Wurst 46 von dem Förderband 34 auf ein Beschleunigungs-Förderband 36 übergeben, welches eine höhere Transportgeschwindigkeit als das Förderband 34 hat, so daß die Würste 46 einen größeren Abstand voneinander bekommen. Ein langsamer laufendes Transportband 48 nimmt die Würste 46 vom Förderband 36 über der Waage 38 auf, wo das tatsächliche Gewicht jeder Wurst 46 einzeln festgestellt wird. In der Auswerteeinheit 40 wird daraufhin das tatsächliche Gewicht mit einem vorgebbaren Sollgewicht für die Würste verglichen und die Differenz zwischen dem Sollgewicht und dem tatsächlichen Gewicht berechnet. Aus dieser Differenz wird ein Stellwert für die Stelleinheit 30 der Darmbremse 24 gebildet.

Der Stellwert ist dabei von der Art, daß die Bremskraft der Darmbremse 24 vergrößert wird, wenn das tatsächliche Gewicht der Würste unter ihrem Sollwert liegt: Wenn die Wursthülle 14 von der Darmbremse 24 stärker gebremst wird, erhöht sich der Druck in der befüllten Teillänge der Wursthülle 14, diese wird infolgedessen geringfügig gedehnt, und Durchmesser, Prallheit, Volumen und mithin auch das Gewicht der gerade hergestellten Teillänge nehmen zu. Umgekehrt wird die Bremskraft der Darmbremse 24 verringert, wenn das gemessene tatsächliche Gewicht der Würste größer als deren Sollgewicht ist. Das Lockern der Darmbremse führt dann zu leichteren Würsten.

Die Bremskraft der Darmbremse 24 hängt davon ab, mit welcher Kraft der Bremsring 26 auf die Außenseite der Wursthülle 14 drückt. Diese Kraft kann eingestellt werden, indem der Einstellring 28 entlang der Konuslängsachse auf der konusförmigen Außenfläche des Bremsringes 26 verschoben wird. Der Bremsring 26 wird dadurch mehr oder weniger stark auf die Wursthülle 14 gedrückt. Das Verschieben des Einstellringes 28 und folglich das Einstellen der Bremskraft geschieht mit Hilfe der Stelleinheit 30.

Im Ergebnis wird also das Abteilen und Abtrennen der Würste mit Hilfe der Markierungen 44 mit der Länge der Wursthülle 14 synchronisiert und ein genaues Gewicht der einzelnen Würste durch Regeln der Prallheit der Würste über eine einstellbare Darmbremse erzielt. Ein solches Verfahren ermöglicht die gewünschten hohen Produktionsgeschwindigkeiten auch bei Würsten in Wursthüllen mit Bilddruck.

## Patentansprüche

1. Verfahren zum Herstellen von Würsten (46), bei dem eine schlauchförmige, an einem Ende (16) verschlossene und mit Bilddruck versehene Wursthülle (14) mit Wurstbrät befüllt wird, indem das Wurstbrät durch das offene Ende der Wursthülle in diese gedrückt und dabei die Wursthülle gegen den Widerstand einer Darmbremse (24) mitgenommen wird und befüllte Teillängen der Wursthülle in Abhängigkeit von Markierungen (44) auf der Wursthülle durch Zusammendrücken und Verschließen abgeteilt sowie anschließend von der übrigen Wursthülle abgetrennt werden,
**dadurch gekennzeichnet,**
**daß** jede befüllte Teillänge nach dem Abtrennen gewogen und die Gewichtsdifferenz zwischen einem vorgebbaren Sollgewicht und dem tatsächlichen Gewicht der Teillänge bestimmt wird, und
**daß** die Bremskraft der Darmbremse (24) erhöht wird, wenn das tatsächliche Gewicht der befüllten Teillänge kleiner als deren Sollgewicht ist, jedoch verkleinert wird, wenn das tatsächliche Gewicht größer als das Sollgewicht ist, bis das tatsächliche Gewicht und das Sollgewicht übereinstimmen.

2. Verfahren nach Anspruch 1, **dadurch gekennzeichnet,**
**daß** die Wursthülle (14) vor dem Befüllen in einem bestimmten Längsabstand mit Markierungen (44) versehen und der befüllte Teil der Wursthülle (14) beim Vorschieben während des Befüllens von wenigstens einem Sensor (42) abgetastet wird, welcher das Abteilen und Abtrennen auslöst, sobald er eine Markierung (44) erfaßt.

3. Verfahren nach Anspruch 1 oder 2, **dadurch gekennzeichnet,**
**daß** als Markierung ein Teil des Bilddrucks verwendet wird.

4. Vorrichtung zum Herstellen von Würsten mittels einer Wursthülle mit Bilddruck, insbesondere zum Durchführen des Verfahrens nach Anspruch 1, mit einem Füllrohr (10) und einer Darmbremse (24) sowie Mitteln zum Verschließen und Abtrennen von befüllten Teillängen der Wursthülle (14),
**dadurch gekennzeichnet,**
**daß** die Vorrichtung eine Waage (38) für einzelne Würste und eine Auswertungseinheit (40) aufweist,
**daß** die Bremskraft der Darmbremse (24) über eine Stelleinheit (30) einstellbar ist und
**daß** die Waage (38) über die Auswertungseinheit (40) mit der Stelleinheit (30) verbunden ist.

5. Vorrichtung nach Anspruch 4, **dadurch gekennzeichnet,**
**daß** die Vorrichtung einen Sensor (42) für Markierungen (44) auf der befüllten Wursthülle (14) aufweist.

## Claims

1. A process of producing sausages (46), wherein a tubular sausage casing (14) closed at one end (16) and provided with a figurative print is filled with sausage meat by pressing the sausage meat through the open end of the sausage casing into the same, where the sausage casing is carried along against the resistance of a casing brake (24) and, depending on markers (44) on the sausage casing, filled partial lengths of the sausage casing are divided off by compressing and closing them and are subsequently cut off from the remaining sausage casing,
**characterized in**
**that** each filled partial length is weighed after being cut off, and the weight difference between a predeterminable desired weight and the actual weight of the partial length is determined, and
**that** the braking force of the casing brake (24) is increased when the actual weight of the filled partial length is smaller than the desired weight thereof, but is decreased when the actual weight is larger than the desired weight, until the actual weight and the desired weight correspond with each other.

2. The process as claimed in claim 1, **characterized in that** before the filling operation the sausage casing (14) is provided with markers (44) at certain longitudinal intervals and when the filled part of the sausage casing (14) is moved forward during the filling operation, the same is scanned by at least one sensor (42), which initiates the process of dividing and cutting as soon as it detects a marker (44).

3. The process as claimed in claim 1 or 2, **characterized in that** part of the figurative print is used as marker.

4. An apparatus for producing sausages in a sausage casing with a figurative print, in particular for carrying out the process as claimed in claim 1, comprising a filling tube (10) and a casing brake (24) as well as means for closing and cutting off filled partial lengths of the sausage casing (14),
**characterized in**
**that** the apparatus comprises a balance (38) for individual sausages and an evaluation unit (40),
**that** the braking force of the casing brake (24) can be set by means of a setting unit (30), and
**that** the balance (38) is connected with the setting unit (30) via the evaluation unit (40).

5. The apparatus as claimed in claim 4, **characterized in that** the apparatus comprises a sensor (42) for markers (44) on the filled sausage casing (14).

## Revendications

1. Procédé pour la fabrication de saucisses (46), au cours duquel un boyau (14) tubulaire, fermé à une extrémité (16) et pourvu d'une illustration imprimée est rempli de chair à saucisses, en refoulant la chair à saucisses par l'extrémité ouverte du boyau dans celui-ci et en entraînant la boyau contre la résistance d'un freine-boyau (24), puis en divisant des longueurs partielles remplies du boyau en fonction de repères (44) sur le boyau par compression et fermeture et en les détachant ensuite du boyau restant
**caractérisé en ce,**
**que** chaque longueur partielle remplie est pesée après le détachement et la différence de poids entre un poids de consigne, qui peut être prescrit, et le poids réel de la longueur partielle est déterminée, et
**que** la force de freinage du freine-boyau (24) est augmentée, si le poids réel de la longueur partielle remplie est inférieur à son poids de consigne, mais est diminuée, si le poids réel est supérieur à son poids de consigne, jusqu'à ce que le poids réel et le poids de consigne coïncident.

2. Procédé suivant la revendication 1, **caractérisé en ce,**
**que** le boyau (14) est pourvu de repères (44) avant l'embossage à un certain intervalle longitudinal et la partie remplie du boyau (14) est explorée pendant l'avancement par au moins un capteur (42), qui déclenche la division et le détachement, dès qu'il enregistre un repère (44).

3. Procédé suivant la revendication 1 ou 2, **caractérisé en ce,**
**qu'**une partie de l'illustration imprimée est utilisée en tant que repère.

4. Dispositif pour la fabrication de saucisses au moyen d'un boyau avec illustration imprimée, en particulier pour l'exécution du procédé suivant la revendication 1, comprenant un tube (10) d'embossage et un freine-boyau (24) ainsi que des moyens pour la fermeture et le détachement de longueurs partielles remplies du boyau (14),
**caractérisé en ce,**
**que** le dispositif comporte une balance (38) pour des saucisses individuelles et une unité (40) d'exploitation,
**que** la force de freinage du freine-boyau (24) est réglable par l'intermédiaire d'une unité (30) de réglage et
**que** la balance (38) est reliée à une unité (30) de réglage par l'intermédiaire d'une unité (40) d'exploitation.

5. Dispositif suivant la revendication 4, **caractérisé en ce,**
**que** le dispositif comprend un capteur (42) pour les repères (44) sur le boyau (14) rempli.
